# EUROPEAN PATENT APPLICATION

(11) **EP 4 760 595 A1**
(43) Date of publication of application: **17.06.2026**
(21) Application number: 24218959.5
(22) Date of filing: 11.12.2024
(51) Int. Cl.: G06N 3/045, G06N 3/096, G06N 3/0985, G06N 20/00

(54) **A METHOD, APPARATUS, AND COMPUTER-READABLE MEDIUM FOR DATASET AUGMENTATION AND VERIFICATION USING FEATURE EMBEDDING TECHNIQUES**

(71) Applicant: AUMOVIO Germany GmbH, 60488 Frankfurt am Main (DE)
(72) Inventor: Bhalla, Aditi, 30175 Hannover (DE); Hellert, Christian, 30175 Hannover (DE)
(74) Representative: Aumovio Corporation

(57) **Abstract**

Embodiments of the present disclosure relate to a method for generating training data for an application-specific task. A training method and a dataset used for training a machine learning model are also disclosed. A machine learning model, a computer program, a computer-readable data carrier and an apparatus are also presented. The method for generating the training data for the application-specific task comprises: fine-tuning a pre-trained machine learning model using a first dataset; obtaining, using said model, original embeddings for input data obtained from a second application-specific dataset; applying, to each of the obtained original embeddings, a corresponding augmentation function, thereby obtaining corresponding augmented embeddings; and adding the augmented embeddings and the original embeddings to an embeddings dataset.

## Description

The present disclosure relates to machine learning. Specifically, the present disclosure relates to generating and validating augmentation data for training machine learning models.

In the field of vehicle occupant monitoring, especially for partially and fully automated vehicles, there are a wide variety of systems and methods to record the current condition of an occupant, e.g., a driver, and to ensure that the occupant behaves appropriately. These driver monitoring systems (DMS) include machine learning models and components that require data for training the models. While data acquisition is possible, it lacks transferability (e.g., to other vehicles, sensor positions, etc.) and variability.

Therefore, synthetic or rendered data is used to train computer models for various detection and control algorithms. However, synthetic data might differ from the target domain (e.g., new camera setup, new cabin interior). In addition, existing data that was recorded for one domain may not be suitable for the target domain. Hence, synthetically generated data and existing data must be adapted to improve model performance.

In some conventional methods, data diversification is done using a generative adversarial network (GAN) or a variational autoencoder (VAR), which generates feature vectors representing images containing facial information, such as for emotion recognition. However, these methods do not validate the generated features to improve the synthetic feature generation and the model performance.

Modern large language models (LLMs) such as Generative Pre-trained Transformer 4 (GPT-4) and Large Language Model Meta A (LlaMa) are used for pattern recognition and chain-of-thought (CoT) description to analyze data, such as handwriting in the form of images and labels. They use feature embeddings to measure distances to predict the next or nearby features. With such an approach, verification can be performed for the semantic "proximity" of two features. However, LLMs are not equipped to verify the real-world authenticity of generated images.

In summary, existing synthetic data generation methods using GANs or VAEs are biased and lack diversity to represent the full range of real-world data. They cannot generalize well across different domains and modalities, training generative AI models to produce high-quality images or videos is computationally expensive and prone to errors, particularly in terms of physical accuracy. Large language models are not equipped to verify and validate the real-world authenticity of generated data directly.

Hence, there is a need to provide an improved method and system for data generation and verification that ensures quality, diversity, and transferability. This need may be satisfied by the subject-matter of the appended independent claims. The appended dependent claims address optional embodiments of the present disclosure.

According to a first aspect of the disclosure, there is provided a method for generating training data for an application-specific task, the method comprising: fine-tuning a pre-trained machine learning model using a first dataset; obtaining, using said model, original embeddings for input data obtained from a second application-specific dataset; applying, to each of the obtained original embeddings, a corresponding augmentation function, thereby obtaining corresponding augmented embeddings; adding the augmented embeddings and the original embeddings to an embeddings dataset.

By fine-tuning a pre-trained machine learning model (e.g. a backbone model) using a first dataset (e.g. large and/or domain-specific dataset, e.g. Drive&Act dataset), and by obtaining using said model, original embeddings (e.g. activations or outputs of a layer of said model) that correspond to input data (e.g. images) obtained from a second application-specific (e.g. driver monitoring, conveyor belt monitoring) dataset (e.g. a small or limited or few-sample dataset), the pre-trained model, fine-tuned on said first dataset (e.g. a large domain-specific dataset), captures a wide range of features and patterns. This helps in generalizing better to new, unseen data from the (e.g. smaller) application-specific dataset. By fine-tuning, the model learns to extract more relevant and nuanced features specific to the application of interest (e.g., driver monitoring), improving the quality of the embeddings.

In addition, using a large pre-trained model helps mitigate overfitting, which is a common issue when training on smaller application-specific datasets. The model retains the robustness and generalization capabilities learned from the large dataset.

Also, fine-tuning a pre-trained model is computationally more efficient than training a model from scratch, especially when dealing with large datasets. This saves time and resources while still achieving high performance.

This approach leverages transfer learning, where knowledge gained from one task (large domain-specific dataset) is transferred to improve performance on a related but different task (small application-specific dataset).

By adding both the augmented embeddings and the original embeddings to the embeddings dataset, one effectively increases the dataset's size and diversity. This expanded dataset can improve the model's ability to generalize and perform well on new, unseen data, as it now includes a broader range of examples and variations derived from the original embeddings.

According to a second aspect of the disclosure, there is provided a method for adjusting augmentation data to original data, the method comprising obtaining an embeddings dataset by the method according to the first aspect of the disclosure; obtaining a similarity score between each original embedding and the corresponding augmented embedding; determining that at least one similarity scores of the obtained similarity scores do not exceed a predetermined threshold; removing, from the embeddings dataset, augmented embeddings corresponding to the at least one similarity scores; adjusting augmentation functions that correspond to the removed augmented embeddings, thereby obtaining adjusted augmentation functions; applying, to each original embedding that corresponds to the removed augmented embeddings, the corresponding adjusted augmentation function, thereby obtaining corresponding augmented embeddings; adding the corresponding augmented embeddings to the dataset; and repeating the steps from the obtaining-a-similarity-score step until the similarity scores exceed the predetermined threshold.

In embodiments, the method for adjusting augmentation data to original data may be a method for adjusting augmented embeddings to original embeddings. The augmented and original embeddings may be as specified in the method for generating training data according to the first aspect of the disclosure.

Applying a corresponding augmentation function to each of the obtained original embeddings may result in the creation of augmented embeddings, which introduce variations and potentially enhance the robustness of the dataset.

Obtaining a similarity score between each original embedding and its corresponding augmented embedding allows for the assessment of how closely the augmented data matches the original. If at least one similarity score does not exceed a predetermined threshold, it indicates that the augmentation may not be effective, leading to the removal of those augmented embeddings from the embeddings dataset. The augmentation functions responsible for the removed embeddings are then adjusted to improve their effectiveness. These adjusted functions are applied to the original embeddings to generate new, adjusted augmented embeddings, which are then added to the embeddings dataset. This iterative process ensures that the augmented data closely aligns with the original data, enhancing the quality and robustness of the embeddings dataset.

In embodiments, the similarity score may be determined using at least one of cosine similarity, Euclidean distance, L1 distance, Jaccard similarity, Pearson correlation coefficient, and machine learning models.

Determining the similarity score using methods such as cosine similarity, Euclidean distance, L1 distance, Jaccard similarity, Pearson correlation coefficient, or machine learning models allows for a precise and varied assessment of how closely the augmented embeddings match the original embeddings. This helps in refining the augmentation functions and improving the overall quality and robustness of the embeddings dataset by ensuring that only the most relevant and effective augmented embeddings are retained.

In embodiments, the predetermined threshold may be obtained by performing empirical analysis on a validation dataset comprising original embeddings and corresponding augmented embeddings.

Obtaining the predetermined threshold through empirical analysis on a validation dataset comprising original and corresponding augmented embeddings ensures that the threshold is data-driven and tailored to the specific characteristics of the embeddings. This process involves analyzing the similarity scores within the validation dataset to identify a threshold that effectively distinguishes between well-augmented and poorly-augmented embeddings. As a result, the threshold is optimized to enhance the quality and relevance of the augmented data, leading to a more robust and reliable dataset for training machine learning models.

In embodiments, adjusting the augmentation functions may comprise using Bayesian optimization to adjust the augmentation functions.

Using Bayesian optimization to adjust the augmentation functions allows for a systematic and efficient approach to finding the optimal parameters for data augmentation. Bayesian optimization iteratively evaluates the performance of different augmentation settings and updates its model to predict better settings in future iterations. This method leverages prior knowledge and observed data to make informed decisions, leading to more effective and targeted adjustments. As a result, the adjusted augmentation functions are more likely to produce high-quality augmented embeddings that enhance the robustness and performance of the embeddings dataset, ultimately improving the accuracy and generalization capabilities of the machine learning models trained on this data.

In embodiments, the original embeddings may be an output of at least one layer of the fine-tuned pre-trained machine learning model.

Since the original embeddings are the output of at least one layer of a fine-tuned pre-trained machine learning model, said embeddings encapsulate both the general knowledge learned from the large pre-trained model and the specific nuances captured during fine-tuning on a domain-specific dataset. This learning enhances the quality and relevance of the embeddings, making them highly informative and representative of the input data. Consequently, these embeddings serve as a robust foundation for further processing, such as augmentation, leading to improved performance in downstream tasks.

In embodiments, the first dataset may be a domain-specific dataset.

In embodiments, a domain-specific dataset may be a large dataset for instance for object recognition, such as ImageNet, which contains millions of labeled images across thousands of categories, providing a broad foundation for recognizing various objects in diverse contexts. On the other hand, an application-specific dataset may be a small dataset collected inside a car for monitoring the driver. Said application-specific dataset may be an existing dataset for driver monitoring, like the Driver Monitoring Dataset (DMD), which includes data specifically collected to analyze driver behavior, attention, and alertness in real-world driving scenarios. This dataset might contain multi-modal data, including RGB, depth, and infrared video recordings of drivers, capturing various states such as distraction, drowsiness, and hand positions. Using these domain-specific and application specific datasets, the backbone model can be fine-tuned to leverage general object recognition capabilities while being specifically adapted to the nuances of driver monitoring tasks.

In embodiments, a domain-specific dataset (first dataset) may be a large, diverse collection of data used to train models on general tasks within a broad domain, such as object recognition (e.g., ImageNet). an application-specific dataset (second dataset) may be a focused collection of data tailored to a particular application or task, such as monitoring driver behavior in real-world scenarios (e.g., Driver Monitoring Dataset).

This diversity allows a pre-trained model to learn general features and patterns that are widely applicable inside one domain and/or across various domains. As a result, the embeddings generated from this dataset are versatile and robust, capturing a wide array of characteristics. When fine-tuned on a smaller, application-specific dataset, the model can leverage this broad knowledge to adapt more effectively to the specific nuances of the application. This combination enhances the model's ability to generalize from the large domain-specific data while also performing well on the specialized tasks of the small application-specific dataset.

In embodiments, the pre-trained machine learning model may fine-tuned using the first dataset by updating the weights of few layers (e.g. last or deepest hidden layer(s)) of the pre-trained machine learning model.

Fine-tuning the pre-trained machine learning model using the first dataset (e.g. non application-specific, but domain-specific) involves updating the weights of a few layers, which can significantly enhance the model's performance on specific tasks. This process allows the model to adapt to the unique characteristics of the first dataset, leading to better generalization and improved accuracy. Additionally, fine-tuning is computationally efficient and faster than training a model from scratch, making it particularly useful when working with limited data. By selectively updating only a few layers, the risk of overfitting is reduced, ensuring that the model retains the broad knowledge from the pre-training phase while effectively incorporating new, domain-specific information.

According to a third aspect of the present disclosure, there is provided an embeddings dataset obtainable by the method for generating training data according to the first aspect of the present disclosure.

The embeddings dataset may be the dataset obtained after all similarity scores exceed the predetermined threshold, as specified in the second aspect of the present disclosure. Due to adding both the augmented embeddings and the original embeddings to the dataset, the dataset obtained by said method is a diversified dataset or a diversified data structure having an effectively increased size and diversity. This expanded dataset can improve the model's ability to generalize and perform well on new, unseen data, as it now includes a broader range of examples and variations derived from the original embeddings.

Said diversified dataset or data structure has the intended technical use of training a machine learning model for an application-specific (e.g. computer vision) task that includes, for instance, object detection, recognition, and classification. When used in training the machine learning model, said data causes the technical effect of a more accurate and reliable performance by the machine learning model. For instance, a more accurate and reliable object detection, recognition, and classification may be achieved.

According to a fourth aspect of the present disclosure, there is provided a training method for a machine learning model for an application-specific task, the training method comprising: providing an embeddings dataset obtainable by the method according to the first aspect of the disclosure; and training the machine learning model based on the embeddings dataset.

Since the embeddings dataset (e.g. the embeddings dataset obtained by the method according to the first aspect of the disclosure and/or the embeddings dataset obtained by the method according to the second aspect of the disclosure) used in training the machine learning model is larger and more diversified (due to the augmented data), as explained above, the machine learning model trained using said data is more effective, reliable, and accurate. This means that the training method causes the effect that the machine learning model obtained after training minimizes overfitting, underfitting, and bias, and is characterized by an improved generalization and consistent predictions.

In embodiments, the trained machine learning model according to the fourth aspect of the disclosure, may be used together with the fined-tuned pre-trained machine learning model (according to the first aspect of the disclosure) to perform the application-specific task (e.g. computer vision task e.g. to monitor a vehicle driver). For example, images taken from the application-specific environment may be first used by the fine-tuned pre-trained machine learning model to generate corresponding embeddings, which are subsequently used by the machine learning model to perform the application-specific task (e.g. object/feature detection, recognition, classification tasks for monitoring the driver in a vehicle, monitoring a part of a conveyor belt in a plant, etc.).

According to a fifth aspect of the present disclosure, there is provided a machine learning model obtainable by the training method according to the fourth aspect of the disclosure.

Since the machine learning model described herein has the technical purpose of being used in an application-specific task (e.g. computer vision task, e.g. object detection, recognition, localization, and/or classification, driver monitoring task), and since the training method used to train said model causes the effect that the machine learning model obtained after training minimizes overfitting, underfitting, and bias, and is characterized by an improved generalization and consistent predictions, said machine learning model is characterized by an improved reliability and accuracy when used to perform the computer vision task.

According to a sixth aspect of the present disclosure, there is provided a computer program comprising instructions which, when the computer program is executed by a computer, cause the computer to: i) carry out the method for generating training data according to the first aspect of the disclosure, and the method for adjusting augmentation data to original data according to the second aspect of the disclosure, or ii) carry out the method according to the fourth aspect of the disclosure, and/or iii) provide an embeddings dataset according to the third aspect of the disclosure, and/or iv) provide a machine learning model obtainable by the method for training according to the fifth aspect of the disclosure.

According to a further aspect of the disclosure, there is provided a computer-readable data carrier having stored thereon the computer program according to the sixth aspect of the disclosure.

According to a further aspect of the disclosure, there is provided an apparatus comprising: one or more interfaces for communication; a memory; and a data processing circuit configured to i) carry out the method for generating training data according to the first aspect of the disclosure, and the method for adjusting augmentation data to original data according to the second aspect of the disclosure, or ii) carry out the method according to the fourth aspect of the disclosure, and/or iii) provide an embeddings dataset according to the third aspect of the disclosure, and/or iv) provide a machine learning model obtainable by the method for training according to the fifth aspect of the disclosure.

According to a further aspect of the present disclosure, there is provided a use of the dataset of the fourth aspect of the disclosure. According to a further aspect of the disclosure there is provided a use of the machine learning model of the fourth aspect of the disclosure.

Examples will now be further described with reference to the figures in which:
Fig. 1 shows a flow diagram illustrating a computer-implemented method 100 for generating training data for an application-specific task.
Fig. 2 shows a flow diagram illustrating a computer-implemented method 200 for adjusting augmentation data to original data.
Fig. 3 shows a schematic illustrating the steps of generating augmentation data according to methods 100 and 200.
Fig. 4 schematically illustrates a block diagram of an embodiment of an apparatus 400 to execute the methods described herein.

### Detailed Description

In several application domains, and especially in cabin sensing in vehicles, domain shifts like different camera position, different camera characteristics or interior design can lead to significant performance degeneration of AI-based cabin sensing algorithms. Considering an already existing large dataset that was collected for a specific domain, and using said dataset to train an AI model, would result in adequate performance for the specific domain only. Using said AI model for a new domain exhibiting said domain shifts, would not necessarily result in an adequate performance.

Hence, new data must be recorded, and the AI must be retrained, which is inconvenient.

In common machine learning approaches, a pre-trained model, often referred to as the backbone model, is used for feature extraction. The backbone model is typically a model pre-trained on a large dataset, such as PCA-based models (Principal Component Analysis) or pre-trained transformers. It learns to extract useful features from the data. The backbone model is trained on a specific task (e.g. object recognition, vehicle occupant monitoring) using a large dataset. After training, the final layer (usually a fully connected layer for classification) is removed. The remaining part of the model is used to extract features (e.g. embeddings) from new data.

For example, a pre-trained neural network, such as a Convolutional Neural Network (CNN), designed for image processing, which has been trained on a large dataset like ImageNet, is adept at extracting hierarchical features from images, capturing elements such as edges, textures, and more complex patterns. Typically, the final layer of this network is a fully connected layer intended to classify images into a large number of categories, corresponding to the 1000 classes in ImageNet. To adapt this model for a new task, this final classification layer is removed, leaving the feature extraction layers intact.

For example, consider a scenario where there is a smaller dataset of images captured from a camera inside a car, aimed at monitoring the driver. The goal is to recognize 10 different driver states, such as looking forward, looking at the side mirrors, using a phone, or being drowsy. A new fully connected layer is added to the model, configured to output 10 classes, one for each driver state in the new dataset. This new final layer is then trained on the smaller dataset, while the weights of the backbone model are either kept fixed or fine-tuned slightly. This approach is faster and requires less data than training an entirely new model from scratch.

Once the training is complete, the modified model is capable of recognizing the 10 different driver states in new images, leveraging the feature extraction capabilities of the pre-trained network. By utilizing a pre-trained model and modifying the final layer, the model can be adapted for a new driver monitoring task with a smaller dataset. This method conserves time and computational resources while taking advantage of the robust features learned from a large dataset.

In order to leverage the backbone model and the large dataset, while also considering a smaller domain-specific dataset, the present invention discloses a method that can generate new features from a small dataset of the new domain guided by the old existing data. The approach uses embedding-based feature verification to overcome the problems of conventional methods, namely the limited fine-grained understanding of real-world image authenticity, the lack of generalization and transferability to other domains and modalities, and the model bias towards most common data.

The disclosed method can be used in any application by leveraging a biased or domain-specific dataset, such as an in-cabin monitoring dataset for activity recognition. It allows to diversify the dataset used to train the AI model by leveraging a large dataset and using the domain-specific dataset to adaptively improve and maintain model accuracy on the target domain.

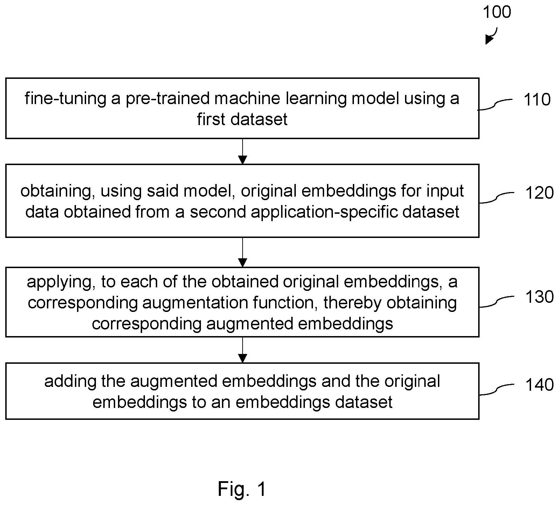

Fig. 1 shows a flow diagram illustrating a computer-implemented method 100 for generating training data used in training a machine learning model for an application specific (e.g. computer vision) task.

In embodiments, the application-specific task may be at least one of driver monitoring in a car, vehicle occupant monitoring, conveyor belt monitoring in industrial settings, medical imaging for diagnosing diseases from X-rays, MRIs, or CT scans, agricultural monitoring to assess crop health and detect pests, security surveillance to identify unusual activities or individuals in restricted areas, retail analytics to analyze customer behavior and optimize store layouts, wildlife monitoring to track and identify animals in their natural habitats, and industrial inspection to detect defects or wear and tear in machinery and infrastructure.

Step 110 of method 100 comprises fine-tuning a pre-trained machine learning model 320 using a first dataset 310.

The pre-trained machine learning model 320 may be a backbone model. The pre-trained machine learning model 320 may comprise at least one of ResNet (Residual Networks), which is widely used for image recognition, BERT (Bidirectional Encoder Representations from Transformers), which is used in natural language processing for tasks like text classification and question answering, VGGNet (Visual Geometry Group Network), known for its simplicity and effectiveness in image classification; Inception (also known as GoogLeNet), which uses a novel architecture to improve computational efficiency and accuracy in image recognition; GPT (Generative Pre-trained Transformer), which is used in generating human-like text; SlowFast network, which captures both slow and fast dynamics in video data; 130 (Inflated 3D ConvNet), which extends 2D ConvNets to 3D for spatiotemporal feature extraction; C3D (Convolutional 3D), designed for learning spatiotemporal features from video clips; TSN (Temporal Segment Networks), which models long-range temporal structures; R(2+1)D, which decomposes 3D convolutions into separate spatial and temporal convolutions for more efficient learning; and ViT (Vision Transformer) models, which utilize a transformer-based architecture that treats images as sequences of fixed-size patches (tokens). These models are widely used for tasks like action recognition, video classification, and video understanding.

In embodiments, the first dataset 310 may be a domain-specific dataset. Said domain-specific dataset may contain a broad range of data that may not be tailored to the specific application or task and/or that covers the domain for said specific application or task. For instance, if the second application-specific dataset 340 is a small dataset for monitoring a driver in a specific car or position/constellation, the domain-specific dataset may be a larger, e.g. generic, dataset for monitoring a driver in cars, or for cars in general or for object detection and recognition in general. For instance, the second application-specific dataset 340 may be a small (limited samples) dataset for vehicle occupant monitoring, and the first dataset 310 may be a larger (e.g. domain-specific) dataset for (e.g. the domain of) person monitoring. For instance, the second application-specific dataset 340 may be a small dataset for grabbing a specific object on a conveyor belt, and the first dataset 310 may be a larger (e.g. domain-specific) dataset for (e.g. the domain of) conveyor belt monitoring. The domain may be the (e.g. general) technical area or function in which the application-specific task is performed. For instance, the domain may be image processing and/or object recognition, and the application-specific task may be image processing and/or object recognition for monitoring vehicle occupants.

In embodiments, the first dataset 310 may be a large and/or domain-specific dataset. The domain-specific dataset may comprise at least one of Drive&Act dataset, which focuses on in-cabin driver behavior, AI City Challenge dataset, which contains video data from traffic cameras for urban traffic analysis, Baidu ApolloScape, which contains annotated traffic sign videos and multi-sensor localization data for autonomous driving; Audi Autonomous Driving Dataset (A2D2), which comprise annotated lidar point clouds and video images for vehicle detection; and Berkeley DeepDrive (BDD100K), with video sequences and annotations for road object detection; and Cityscapes, which provides pixel-level annotated images from urban environments for training neural networks in semantic segmentation.

Fine-tuning said pre-trained machine learning model 320 as proposed in this disclosure, allows the model to adapt to the specific nuances of the first (domain-specific, e.g. not application-specific) dataset while leveraging the broad knowledge it gained from the initial training (pre-training) on a large dataset.
Step 120 of method 100 comprises obtaining, using said model, original embeddings 350 corresponding to input data obtained from a second application-specific dataset 340;

In embodiments, the original embeddings 350 may be the output of at least one layer (e.g. the final hidden layer(s)) of the fine-tuned pre-trained model. The original embeddings 350 may be high-dimensional vectors that represent the input data in a way that captures its essential features and patterns. For example, in image processing, an embedding 350 might represent an image in a way that highlights its key characteristics.

The input data comprises at least on of text, audio, video, images, sensor data, and time series data.

The application-specific dataset 340 may be data tailored to a particular task or application. Said dataset may be used to further train the fine-tuned pre-trained model to improve its performance on the specific task. The application-specific dataset 340 may be a small, or few-sample dataset. The application-specific dataset 340 may comprise at least one of driver monitoring dataset, for instance containing images and/or videos of drivers to detect drowsiness or distraction, a conveyor belt monitoring dataset, for instance containing images of items on a conveyor belt to identify defects and/or ensure quality control, medical imaging dataset, for instance containing MRIs for diagnosing specific medical conditions.

Fine-tuning a pre-trained machine learning model 320 using the first datastet e.g. a large, domain-specific dataset, and then applying it to a smaller, application-specific dataset 340 enhances the model performance since the model benefits from the extensive knowledge gained during pre-training, which helps it perform better on the smaller, application-specific dataset 340. This is because the model has already learned general features from the large dataset, which can be fine-tuned to recognize more specific patterns in the smaller dataset. The process leverages transfer learning, where knowledge from the pre-trained model is transferred to the new task. This means the model can quickly adapt to new tasks with relatively few training examples.

In addition, the original embeddings 350 obtained from the fine-tuned model are more robust and relevant to the specific application. These embeddings 350 capture important features that are critical for the specific task, such as driver monitoring or conveyor belt monitoring captures a wide range of features and patterns. This helps in generalizing better to new, unseen data from the (e.g. smaller) application-specific dataset 340. By fine-tuning, the model learns to extract more relevant and nuanced features specific to the application of interest (e.g., driver monitoring), improving the quality of the embeddings.

Step 130 of method 100 comprises applying, to each of the obtained original embeddings 350, a corresponding augmentation function, thereby obtaining corresponding augmented embeddings 360.

In embodiments, the augmentation function may comprise at least one of noise addition, where random noise may be added to the original embeddings 350 to obtain the augmented embeddings 360 thereby making the model more resilient to variations, dropout, which randomly sets a fraction of the embedding values to zero to prevent overfitting; scaling, where original embeddings 350 may be multiplied by a random factor to adjust their magnitude, thereby obtaining augmented embeddings 360; shifting/translating, which involves adding a constant value to the original embeddings 350 to change their baseline, thereby obtaining augmented embeddings 360; rotation, which may apply a rotational transformation to the original embeddings 350; normalization, which may scale the original embeddings 350 to have a mean of zero and a standard deviation of one; quantization, which may reduce the precision of the original embeddings to save memory and computational resources; and dimensionality reduction techniques like PCA (Principal Component Analysis) or t-SNE (t-Distributed Stochastic Neighbor Embedding), which may reduce the number of features while preserving important information in the original embeddings 350, thereby obtaining augmented embeddings 360. These augmentations help the model generalize better by simulating different scenarios and variations in the input data.

Step 140 of method 100 comprises adding the augmented embeddings and the original embeddings to an embeddings dataset 380.

The embeddings dataset 380 can include various types of data represented as numerical vectors. For example, the embeddings dataset 380 may comprise at least one of text embeddings, which might contain vectors representing sentences or documents, capturing their semantic meaning for tasks like search or classification, image or video embeddings, which could include vectors derived from images and/or videos, useful for tasks such as image recognition or similarity search, Audio embeddings, which might represent audio clips, enabling applications like speech recognition or audio classification. These datasets facilitate efficient and effective data processing across diverse applications.

Adding both original and augmented embeddings to the embeddings dataset 380 enhances the model's robustness and generalization capabilities. This combined dataset increases the diversity of training examples, helping the model learn to handle a wider range of variations and reducing the risk of overfitting. The augmented embeddings introduce slight modifications that simulate different scenarios, making the model more adaptable to real-world data. This approach also improves the model's ability to capture subtle patterns and relationships within the data, leading to more accurate and reliable predictions.

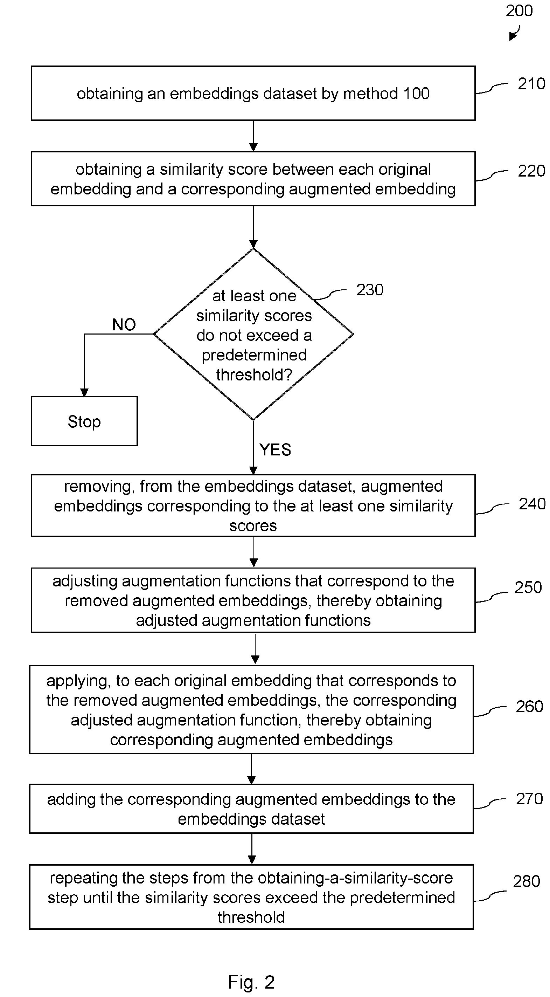

Fig. 2 shows a flow diagram illustrating a computer-implemented method 200 for adjusting augmentation data to original data.

Step 210 of method 200 comprises obtaining an embeddings dataset 380 by method 100.

Step 220 of method 200 comprises obtaining a similarity score between each original embedding and a corresponding augmented embedding.

In embodiments, the similarity score may be determined using at least one of cosine similarity, Euclidean distance, L1 distance, Jaccard similarity, Pearson correlation coefficient, and machine learning models.

For instance, using a machine learning model for determining similarity scores may provide accurate and representative scores because said model can learn complex, non-linear relationships within the embeddings data.

In embodiments, the corresponding augmented embedding may be a corresponding augmented embedding and/or and a corresponding adjusted augmented embedding. The corresponding adjusted augmented embedding may be obtained by the adjusting steps 250 and/or 260 discussed below.

Step 230 of method 200 comprises determining that at least one similarity scores of the obtained similarity scores do not exceed a predetermined threshold.

In embodiments, the predetermined threshold may be obtained by performing empirical analysis on a validation dataset comprising original embeddings and corresponding augmented embeddings.

The predetermined threshold may be determined through a combination of empirical analysis and domain expertise. This may involve analyzing the distribution of similarity scores for known similar and dissimilar pairs within a validation dataset to identify a threshold that minimizes false positives and false negatives. Techniques such as Receiver Operating Characteristic (ROC) curves can be used to find the optimal balance between sensitivity and specificity. Additionally, said predetermined threshold may be adjusted based on the specific requirements and tolerance for error in the application domain, ensuring that the chosen threshold aligns with the desired level of accuracy and reliability.

Step 240 of method 200 comprises removing, from the embeddings dataset 380, augmented embeddings corresponding to the at least one similarity scores.

In embodiments, removing augmented embeddings from the embeddings dataset 380 when their similarity scores do not exceed a predetermined threshold may help maintain the quality and relevance of the dataset. This process ensures that only embeddings which contribute meaningful and diverse information are retained, thereby preventing the model from learning redundant or irrelevant patterns. By filtering out these less useful augmented embeddings, the dataset remains focused on high-quality data, which enhances the model's performance and generalization capabilities. This selective retention of embeddings is crucial for building robust and efficient machine learning model.

Step 250 of method 200 comprises adjusting augmentation functions that correspond to the removed augmented embeddings, thereby obtaining adjusted augmentation functions.

In embodiments, adjusting augmentation functions that correspond to the removed augmented embeddings can involve several approaches e.g. to improve their effectiveness. For instance, if noise addition was too aggressive, reducing the noise level can make the embeddings more useful. If dropout was too high, lowering the dropout rate can help retain more information. Scaling factors can be fine-tuned to better match the data distribution, and shifting values can be adjusted to ensure they align more closely with the original data's range. Additionally, rotation angles can be modified to better capture relevant variations without distorting the embeddings. These adjustments help create more effective augmented embeddings that enhance the model's performance and generalization.

In embodiments, adjusting the augmentation functions may comprise using Bayesian optimization to adjust the augmentation functions.

In embodiments using Bayesian Optimization to adjust the augmentation parameters may comprise: approximate using a surrogate model (e.g. Gaussian Process or another probabilistic model) an objective function to optimize dataset diversity f(θ) subject to similarity score using augmentation parameters already determined based on the augmentation parameters Θ (e.g., mean, covariance, rotation angle, scaling factor, skewing factor noise level, etc.). An objective function may be utilized combining diversity f(θ) and similarity s(θ) (e.g. f*(θ) = f(θ) + α.s(θ), α is trade-off parameter balancing diversity and similarity, and similarity score s(θ) can be defined using cosine similarity). The surrogate model may predict the mean m(θ) of the objective function (the model's best estimate of the objective value at Θ), and predicts the uncertainty (variance) of the objective function k(θ,θ') (how uncertain the model is about its prediction at Θ), e.g. Gaussian processs GP(m(θ), k(θ,θ')).

The next augmentation Θnext to evaluate may be determined by an acquisition function that uses the surrogate model's predictions: E*(θ) = E[max(0, f*(θ)-f*(θbest))], by balancing exploration and exploitation. Exploitation focuses on areas where the surrogate model predicts high values for the objective function (i.e. promising augmentation parameters), while exploration focuses on areas where the surrogate model has high uncertainty, as these regions might reveal better parameters. The acquisition function takes the predicted mean and uncertainty from the surrogate model as inputs, and outputs a scalar value indicating how promising an augmentation parameter set is for the next evaluation.

In embodiments, the BO explained in the paragraphs above and below may be applied to each embedding that did not pass the similarity test (embedding similarity score does not exceed the predetermined threshold), thereby generating one augmentation function (rotation, translation, scaling, etc.) that applies to each embedding.

In embodiments, the BO explained in the paragraphs above and below may be applied to all embeddings at once that did not pass the similarity test (embeddings similarity scores do not exceed the predetermined threshold), thereby generating one augmentation function (rotation, translation, scaling, etc.) that applies to all embeddings at once.

In embodiments, using Bayesian optimization to adjust augmentation functions may comprise, first, define the augmentation functions and their parameters as the search space. Next, initialize the process by sampling a set of parameter values and evaluating their performance on the validation dataset. A surrogate model, such as a Gaussian process, is then used to predict the performance of different parameter combinations. An acquisition function, such as Expected Improvement, selects the next set of parameters to evaluate based on a balance of exploration and exploitation. This process iterates, updating the surrogate model with new results and refining the parameter search until the optimal augmentation functions are found, improving the model's performance and generalization.

The Bayesian optimization (BO) allows for systematic exploration and exploitation of the parameter space for augmentation. The objective function of the BO quantifies the quality of the augmented embeddings. This function can combine similarity: high similarity means augmented embeddings retain meaningful relationships to the original embeddings, and diversity: ensures the augmented embeddings are not too close to the original embeddings, introducing diversity. The surrogate model focuses evaluations on promising regions, avoiding exhaustive or random search.

By optimizing the tradeoff between similarity and diversity, BO generates augmented features that retain meaningful relationships to the original embeddings (high similarity), and that introduce sufficient variability to enhance generalization in downstream tasks (high diversity). BO adapts the augmentation parameters dynamically based on feedback (similarity scores and diversity measures), ensuring continuous improvement.

Accordingly, using BO to tune augmentation parameters enhances the quality of augmented embeddings by balancing similarity (to retain meaningful relationships with the original embeddings) and diversity (to introduce variability for better generalization). BO efficiently explores the parameter space by leveraging a surrogate model, focusing on promising regions while avoiding exhaustive searches. This process improves downstream tasks such as classification and clustering by generating embeddings that are robust, diverse, and optimized for performance, reducing overfitting and enabling better model generalization. Additionally, BO adapts dynamically to feedback, ensuring optimal augmentation with fewer computational resources.

Step 260 of method 200 comprises applying, to each original embedding that corresponds to the removed augmented embeddings, the corresponding adjusted augmentation function, thereby obtaining corresponding augmented embeddings.

Said applying step involves taking each original embedding that had its corresponding augmented embedding removed and applying the newly adjusted augmentation function to it. This process generates new augmented embeddings that are more aligned with the desired data characteristics. For example, if the original augmentation added too much noise, the adjusted function might add a reduced amount of noise. Similarly, if the original scaling factor was too high, the adjusted function would use a more appropriate scaling factor. By applying these adjusted functions, the resulting augmented embeddings are more likely to enhance the model's performance and generalization, ensuring that the dataset remains diverse and representative of the real-world scenarios the model will encounter. In embodiments, the obtained corresponding augmented embeddings may be corresponding adjusted augmented embeddings.

Step 270 of method 200 comprises adding the corresponding augmented embeddings to the embeddings dataset 380.

Adding the corresponding augmented embeddings to the embeddings dataset 380 enhances the model's ability to generalize and perform well on diverse data. This process increases the variety and richness of the training data, allowing the model to learn from a broader range of examples and scenarios. As a result, the model becomes more robust and capable of handling variations in real-world data, leading to improved accuracy and reliability in its predictions.

Step 280 of method 200 comprises repeating the steps 220-270 from the obtaining-a-similarity-score step 220 until the similarity scores exceed the predetermined threshold.

In embodiments, repeating the steps 220-270 until the similarity scores exceed the predetermined threshold can involve several iterations of adjustments and evaluations. For example, if initial similarity scores are low, the augmentation functions might be further refined by reducing noise levels or adjusting scaling factors. Each iteration may involve reapplying these adjusted functions to the original embeddings and recalculating the similarity scores. This iterative process continues until the scores meet or exceed the predetermined threshold, e.g. ensuring that the augmented embeddings are sufficiently similar to the original ones, while maintaining diversity. The effect of this repetition is a more robust and finely-tuned embeddings dataset 380, which enhances the model's ability to generalize and perform accurately on new data.

In embodiments the embeddings dataset 380 obtained after the similarity scores exceed the predetermined threshold may be used to train a (e.g. small) machine learning model 390 (e.g. feedforward head model) for the application specific task, wherein the embeddings of the embeddings dataset are used as input to said machine learning model 390, and the ground truth labels from the application specific task, such as object classes or categories (for object recognition, or driver status (focused, distracted, drowsy etc. for driver monitoring), wherein for each original embedding (that correspond to a specific input data (e.g. image or video) and its augmented embedding in the embeddings dataset, there is a one or more ground truth labels.

The machine learning model 390 trained using said embeddings dataset 380, may be used together with the fined-tuned pre-trained machine learning model 330 (discussed in step 110) during inference time to perform the application-specific task (e.g. computer vision task e.g. to monitor a vehicle driver). For example, images taken from the application-specific environment (e.g. inside a car cabin) may be first used by the fine-tuned pre-trained machine learning model 330 to generate corresponding embeddings, which are subsequently used by the (e.g. small) machine learning model to perform the application-specific task (e.g. object and/or feature and/or status detection, recognition, classification tasks for monitoring the driver in a vehicle or for monitoring a part of a conveyor belt in a plant, etc.).

In embodiments, during inference-time, the fine-tuned pre-trained machine learning model 330, which has been adapted using a large, domain-specific dataset, may operate in tandem with the (e.g. small) machine learning model 390 trained on the embeddings dataset 380 to perform application-specific tasks. The fine-tuned model provides robust feature extraction capabilities, leveraging its extensive pre-training to recognize general patterns and objects. These extracted features, or embeddings, are then fed into the (e.g. small) model, which has been specifically trained on the embeddings dataset 380 tailored to the application at hand.

For instance, in a driver monitoring system, the fine-tuned model 330 might extract features (i.e. embeddings e.g. from at least one layer) from video frames, capturing details such as eye movement, head position, and hand gestures. These features are then processed by the (e.g. small) machine learning model 390, which has learned to interpret these embeddings in the context of driver behavior, enabling it to detect states like distraction or drowsiness. Similarly, in a conveyor belt monitoring system, the fine-tuned model could extract features (i.e. embeddings) from images of the conveyor belt, identifying objects or anomalies, which the machine learning model 390 then classifies or recognizes based on its specialized training. This collaborative approach ensures that the system can efficiently and accurately perform complex, application-specific tasks by combining the strengths of both models.

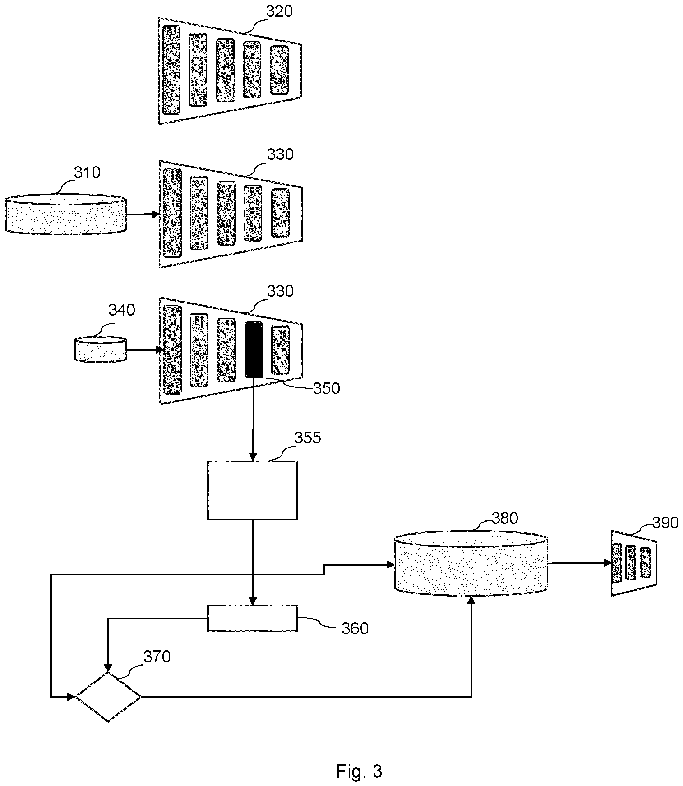

Fig. 3 shows a schematic illustrating the steps of generating augmentation data according to methods 100 and 200.

A first dataset 310 may be a domain-specific dataset, for instance for the domain of vehicle monitoring or occupant monitoring. The first dataset 310 is used to fine-tune pre-trained machine learning model 320 (e.g. backbone model), thereby obtaining a fine-tuned pre-trained machine learning model 330. The fined-tune pre-trained machine learning model 330 is then used to generate original embeddings 350 corresponding to a set of input data (e.g. images) taken from an application-specific dataset 340. The application-specific dataset may be a small dataset collected locally for a specific application, for instance driver monitoring inside a (e.g. specific) car. The original embeddings 350 are then augmented, using augmentation module 355 that applies augmentation functions like rotation, scaling, flipping, and noise-adding, to the original embeddings to obtain the augmented embeddings 360. Each augmented embedding is compared, in the comparison module 370, with the corresponding original embedding to check for similarity and diversity (e.g. by using similarity cosine and/or Bayesian optimization and/or a machine learning model) using a similarity score. If the similarity score is bigger than a predetermined threshold, the augmented embedding is added to the embeddings dataset 380. If the similarity score is not bigger than (or does not exceed) said predetermined threshold, the augmentation function corresponding to said similarity score is updated/adjusted and the updated/adjusted augmentation function is applied to the corresponding original embedding. The process is repeated until all augmented embeddings have a similarity score that exceeds the predetermined threshold.

In the present disclosure, any feature or example described in an embodiment, example, and/or method (e.g. method 100, 200, 300), may be combined with any feature or example of another embodiment, example, and/or method, unless otherwise specified.

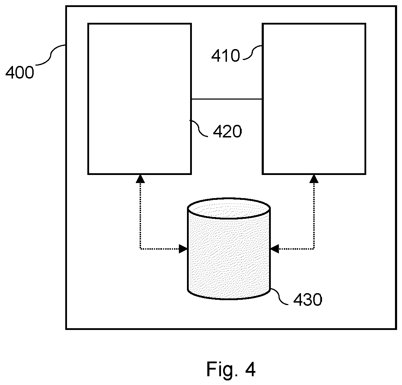

Fig. 4 schematically illustrates a block diagram of an embodiment of an apparatus 400 to execute the methods described herein.

The apparatus 400 comprising one or more interfaces 410 for communication and one or more processors or data processing circuits 420 configured to execute any one of the methods described herein. The apparatus further comprises a memory or a storage medium 430.

The storage medium 430 (or a data carrier, or a computer-readable data carrier, or a computer-readable medium) may comprise, stored thereon, a computer program or computer-executable instructions for performing one of the methods described herein when it is performed by one or more processors 420. The processors 420 may communicate with the storage medium 430 directly and/or via the one or more interfaces 410.

In embodiments, the one or more interfaces 410 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 420 may correspond to or comprise any type of programable hardware. So, examples of the data processing circuit 420, e.g., comprise a memory, microcontroller, field programmable gate arrays, one or more central and/or graphical processing units. To execute the proposed method, the data processing circuit 420 may be configured to access or retrieve an appropriate computer program for the execution of the proposed method from a memory of the data processing circuit 420 or a separate memory which is communicatively coupled to the data processing circuit 420.

Some or all of the method steps described above with regard to Figures 1-3 may be implemented by a computer in that they are executed by (or using) a processor, a microprocessor, an electronic circuit, or the data processing circuit 420. For example, the implementation can be performed using a non-transitory storage medium such as a computer-readable storage medium or data carrier. Such computer-readable media include any media that can be accessed by either a general-purpose or a specialized computer system.

Generally, the methods described herein can be implemented as a computer program product with a program code or computer-executable instructions, the program code or computer-executable instructions being operative for performing one of the methods when the computer program products run on a computer. The program code or the computer-executable instructions may, for example, be stored on the computer-readable storage medium 430.

## Claims

1. A method for generating training data for an application-specific task, the method comprising:
fine-tuning (105) a pre-trained machine learning model using a first dataset;
obtaining (110), using said model, original embeddings for input data obtained from a second application-specific dataset;
applying (115), to each of the obtained original embeddings, a corresponding augmentation function, thereby obtaining corresponding augmented embeddings; and
adding (120) the augmented embeddings and the original embeddings to an embeddings dataset.

2. A method for adjusting augmentation data to original data, the method comprising:
obtaining (210) an embeddings dataset by the method of claim 1;
obtaining (220) a similarity score between each original embedding and a corresponding augmented embedding;
determining (230) that at least one similarity scores of the obtained similarity scores do not exceed a predetermined threshold;
removing (240), from the embeddings dataset, augmented embeddings corresponding to the at least one similarity scores;
adjusting (250) augmentation functions that correspond to the removed augmented embeddings, thereby obtaining adjusted augmentation functions;
applying (260), to each original embedding that corresponds to the removed augmented embeddings, the corresponding adjusted augmentation function, thereby obtaining corresponding augmented embeddings;
adding (270) the corresponding augmented embeddings to the embeddings dataset; and
repeating (280) the steps (220)-(270) from the obtaining-a-similarity-score step (220) until the similarity scores exceed the predetermined threshold.

3. The method of claim 2, wherein the similarity score is determined using at least one of cosine similarity, Euclidean distance, L1 distance, Jaccard similarity, Pearson correlation coefficient, and machine learning models.

4. The method of claims 2 or 3, wherein the predetermined threshold is obtained by performing empirical analysis on a validation dataset comprising original embeddings and corresponding augmented embeddings.

5. The method of any one of claims 2 to 4, wherein adjusting the augmentation functions comprises using Bayesian optimization to adjust the augmentation functions.

6. The method of any previous claim, wherein the original embeddings are an output of at least one layer of the fine-tuned pre-trained machine learning model.

7. The method of any previous claim, wherein the first dataset is a domain-specific dataset.

8. An embeddings dataset obtainable by a method of any one of the previous claims for training a machine learning model for an application-specific task.

9. A method for training a machine learning model for an application-specific task, the method comprising:
providing an embeddings dataset obtainable by a method of claims 1 to 7; and
training the machine learning model based on the embeddings dataset.

10. A machine learning model obtainable by the training method of claim 9.

11. A computer program comprising instructions which, when the computer program is executed by a computer, cause the computer to (i) carry out the method of claims 1 to 7 and 9, (ii) provide an embeddings dataset of claim 8, and/or (iii) provide a machine learning model of claim 10.

12. A computer-readable data carrier having stored thereon the computer program of claim 11.

13. An apparatus (400) comprising:
one or more interfaces for communication (410);
a memory (430); and
a data processing circuit (420) configured to (i) carry out the method of claims 1 to 7 and 9, (ii) provide a dataset of claim 8, and/or (iii) provide a machine learning model of claim 10.

14. Use of the embeddings dataset of claim 8.

15. Use of the machine learning model of claim 10.
